# EUROPEAN PATENT APPLICATION

(11) **EP 4 704 210 A1**
(43) Date of publication of application: **04.03.2026**
(21) Application number: 24796858.9
(22) Date of filing: 15.04.2024
(51) Int. Cl.: H01M 10/0567, H01M 10/052, H01M 10/0569

(54) **NONAQUEOUS ELECTROLYTIC SOLUTION AND NONAQUEOUS ELECTROLYTE SECONDARY BATTERY**

(30) Priority: 28.04.2023 JP 2023074049; 28.09.2023 JP 2023168633
(71) Applicant: Panasonic Intellectual Property Management Co., Ltd., Kadoma-shi, Osaka 571-0057 (JP)
(72) Inventor: OKI, Yukihiro, Kadoma-shi, Osaka 571-0057 (JP); ASANO, Kazuko, Kadoma-shi, Osaka 571-0057 (JP); SHIRAKAMI, Atsuro, Kadoma-shi, Osaka 571-0057 (JP); SATO, Kento, Kadoma-shi, Osaka 571-0057 (JP)
(74) Representative: Novagraaf International SA
(86) International application number: PCT/JP2024/015049
(87) International publication number: WO 2024/225104

(57) **Abstract**

A nonaqueous electrolyte solution according to the present disclosure includes a nonaqueous solvent, an electrolyte dissolved in the nonaqueous solvent, and particles of a phosphorus-containing compound. The particles of the phosphorus-containing compound are insoluble in the nonaqueous solvent. The phosphorus-containing compound includes at least one selected from the group consisting of Li₃PO₄, Na₃PO₄, K₃PO₄, LiPO₃, LiPO₃F, metaphosphoric acid, and calcium phosphate. The nonaqueous electrolyte solution according to the present disclosure has fluidity at 25°C. A secondary battery 100 according to the present disclosure includes a positive electrode 5, a negative electrode 6, and the nonaqueous electrolyte solution according to the present disclosure.

## Description

### TECHNICAL FIELD

The present disclosure relates to a nonaqueous electrolyte solution and a nonaqueous electrolyte secondary battery.

### BACKGROUND ART

As is known to those skilled in the art, in conventional batteries, the electrolyte may be decomposed by the active material. The decomposition of the electrolyte leads to disadvantages such as an increase in the internal resistance of the battery and a deterioration in the cycle characteristics of the battery.

Patent Literature 1 discloses a nonaqueous electrolyte secondary battery including a negative electrode formed of metallic lithium or a non-graphitizable carbon material, a positive electrode, and a nonaqueous electrolyte solution. Patent Literature 1 discloses that a nonaqueous electrolyte secondary battery including vinylene carbonate as a nonaqueous solvent exhibits favorable cycle characteristics. Patent Literature 2 discloses an ion secondary battery composed of a positive electrode formed of a composite lithium oxide or a composite sodium oxide, a negative electrode formed of a material capable of retaining lithium or sodium, a separator, and an electrolyte solution formed of a nonaqueous solvent, wherein the electrolyte solution contains fluoroethylene carbonate and phosphorus compound particles.

### CITATION LIST

### Patent Literature

Patent Literature 1: JP 2005-268230 A
Patent Literature 2: JP 2012-018801 A

### SUMMARY OF INVENTION

### Technical Problem

The present disclosure provides a nonaqueous electrolyte solution suitable for enhancing the cycle characteristics of batteries.

### Solution to Problem

A nonaqueous electrolyte solution of the present disclosure includes:
a nonaqueous solvent;
an electrolyte dissolved in the nonaqueous solvent; and
particles of a phosphorus-containing compound insoluble in the nonaqueous solvent, wherein
the phosphorus-containing compound includes at least one selected from the group consisting of Li₃PO₄, Na₃PO₄, K₃PO₄, LiPO₃, LiPO₃F, metaphosphoric acid, and calcium phosphate, and
the nonaqueous electrolyte solution has fluidity at 25°C.

### Advantageous Effects of Invention

According to the technique of the present disclosure, the cycle characteristics of the battery can be enhanced.

### BRIEF DESCRIPTION OF DRAWINGS

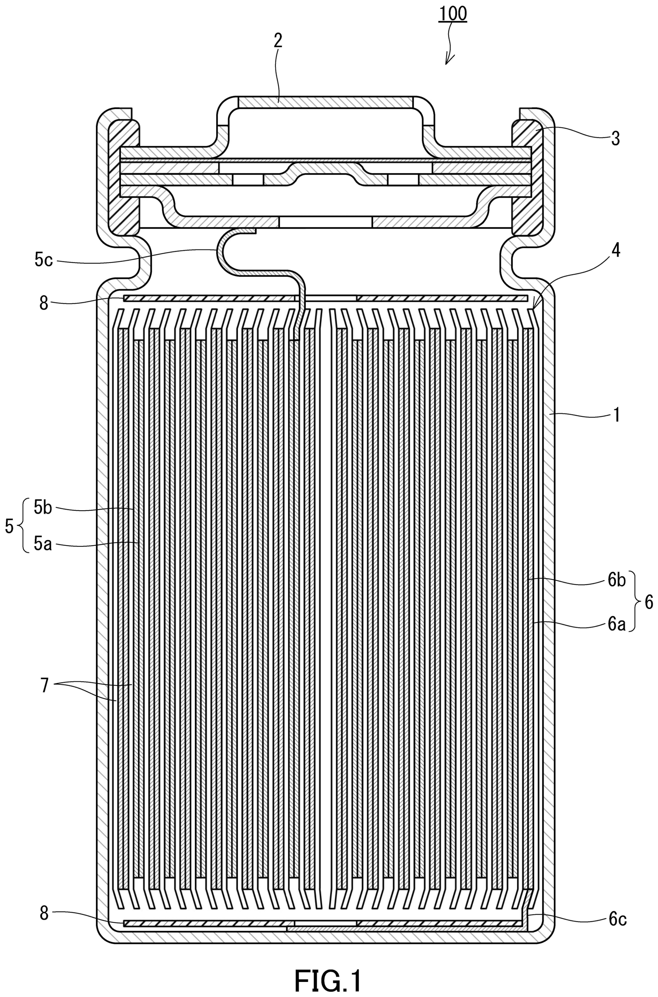

FIG. 1 is a cross-sectional view schematically showing an example of a nonaqueous electrolyte secondary battery according to Embodiment 2.

### DESCRIPTION OF EMBODIMENTS

Embodiments of the present disclosure are described in detail below with reference to the drawings. The present disclosure is not limited to the embodiments described below.

### (Embodiment 1)

A nonaqueous electrolyte solution according to Embodiment 1 includes a nonaqueous solvent, an electrolyte dissolved in the nonaqueous solvent, and particles of a phosphorus-containing compound insoluble in the nonaqueous solvent. The above phosphorus-containing compound includes at least one selected from the group consisting of Li₃PO₄, Na₃PO₄, K₃PO₄, LiPO₃, LiPO₃F, metaphosphoric acid, and calcium phosphate. The nonaqueous electrolyte solution according to Embodiment 1 has fluidity at 25°C. When a battery using the nonaqueous electrolyte solution according to Embodiment 1 is operated, the particles of the phosphorus-containing compound dispersed in the nonaqueous electrolyte solution form a coating film on the surface of the positive electrode. Accordingly, oxidative decomposition of the solvent at the interface between the nonaqueous electrolyte solution and the positive electrode can be suppressed. Furthermore, even when the coating film becomes damaged over time and through repeated charging and discharging, the particles of the phosphorus-containing compound dispersed in the nonaqueous electrolyte solution are capable of repairing the coating film. Accordingly, the nonaqueous electrolyte solution of the present disclosure can achieve a long-lasting effect of suppressing the oxidative decomposition of the solvent compared with, for example, a battery in which a coating film is directly formed on the positive electrode during assembly. Thus, the nonaqueous electrolyte solution according to Embodiment 1 can enhance the cycle characteristics of the battery.

In the present disclosure, the term "having fluidity at 25°C" means having a viscosity of 20,000 mPa•s or less at 25°C. The nonaqueous electrolyte solution according to Embodiment 1 is not required to always have fluidity at 25°C, and may, for example, have thixotropy. "Having fluidity at 25°C" also includes, for example, a case where the nonaqueous electrolyte solution has a viscosity exceeding 20,000 mPa•s at 25°C when left standing, but has a viscosity of 20,000 mPa•s or less at 25°C upon application of a force such as shear generated by stirring.

The viscosity of the nonaqueous electrolyte solution according to Embodiment 1 at 25°C may be, for example, 5,000 mPa•s or less, 3,000 mPa•s or less, or 1,000 mPa•s or less. The lower limit of the viscosity of the nonaqueous electrolyte solution according to Embodiment 1 at 25°C is not particularly limited and is, for example, 1.0 mPa•s or more. The nonaqueous electrolyte solution according to Embodiment 1 is, for example, in liquid form. The liquid form includes sols. That is, the nonaqueous electrolyte solution according to Embodiment 1 may be a nonaqueous colloidal solution in which the particles of the phosphorus-containing compound are dispersed.

In the present disclosure, the term "particles of a phosphorus-containing compound insoluble in a nonaqueous solvent" means particles of a phosphorus-containing compound for which 100 mL or more of a nonaqueous solvent is required to dissolve 1 g at 25°C. That is, the solubility of the particles of the phosphorus-containing compound in 100 mL of the nonaqueous solvent is 1 g or less. Here, the term "dissolve" means that, when the particles of the phosphorus-containing compound are added to the nonaqueous solvent in a container and dissolved therein, both of the following are satisfied: the transmittance of the solution obtained does not change from the transmittance of the solvent, that is, no cloudiness is observed in the solution; and after standing for 24 hours, no sediment is observed on the bottom surface of the container. For example, lithium difluorophosphate (LiPO₂F₂) is soluble in esters, and is not included in the particles of the phosphorus-containing compound of the present disclosure when the nonaqueous solvent contains an ester.

The particles of the phosphorus-containing compound may have a solubility of 0.1 g or less in 100 mL.

The calcium phosphate in the particles of the phosphorus-containing compound is, for example, hydroxyapatite.

The phosphorus-containing compound may include at least one selected from the group consisting of Li₃PO₄, Na₃PO₄, K₃PO₄, LiPO₃, LiPO₃F, and metaphosphoric acid.

The phosphorus-containing compound may include Li₃PO₄. That is, the nonaqueous electrolyte solution of the present disclosure may include particles of Li₃PO₄. According to the above configuration, the cycle characteristics of the battery can be enhanced.

In the nonaqueous electrolyte solution according to Embodiment 1, the content of the particles of the phosphorus-containing compound may be 0.1 vol% or more and 10 vol% or less. The content of the particles of the phosphorus-containing compound may be 0.1 vol% or more and 8 vol% or less, 0.5 vol% or more and 6 vol% or less, 1 vol% or more and 5 vol% or less, or 1 vol% or more and 4 vol% or less. According to the above configuration, favorable dispersibility of the particles of the phosphorus-containing compound and favorable fluidity of the nonaqueous electrolyte solution can be achieved.

The content of the particles of the phosphorus-containing compound in the nonaqueous electrolyte solution according to Embodiment 1 can be determined, for example, by the following method. The volume of the nonaqueous electrolyte solution is measured, and then the nonaqueous electrolyte solution is filtered through a filter to separate the particles. The separated particles are washed with a solvent such as dimethyl carbonate, the washing solvent is evaporated and dried, and then the mass of the particles is measured. The volume of the particles is calculated from the mass of the particles and the specific gravity determined from the components of the particles. The components of the particles can be determined by any of various analytical methods, such as inductively coupled plasma spectrometry (ICP), X-ray diffractometry (XRD), infrared absorption spectroscopy (IR), and nuclear magnetic resonance spectroscopy (NMR). Thus, the content of the particles of the phosphorus-containing compound in the nonaqueous electrolyte solution can be calculated. Additionally, the volume of the nonaqueous electrolyte solution can also be calculated from the composition and mass thereof. The composition of the nonaqueous electrolyte solution can be measured by liquid chromatography, gas chromatography, or the like.

The average particle diameter of the particles of the phosphorus-containing compound may be 1 nm or more and 500 nm or less. According to the above configuration, the particles of the phosphorus-containing compound in the nonaqueous electrolyte solution have enhanced dispersibility, enabling enhanced industrial productivity of the nonaqueous electrolyte solution. The average particle diameter of the particles of the phosphorus-containing compound may be 5 nm or more and 400 nm or less, or 10 nm or more and 300 nm or less. When the average particle diameter of the particles of the phosphorus-containing compound is 500 nm or less, in a battery using the nonaqueous electrolyte solution according to the present disclosure, upon permeation of the nonaqueous electrolyte solution into the positive electrode active material layer, the particles of the phosphorus-containing compound can penetrate between the positive electrode active material particles provided within the positive electrode active material layer. Accordingly, a coating film of the phosphorus-containing compound is also formed on the surface of the positive electrode active material provided within the positive electrode active material layer, and therefore, the oxidative decomposition of the solvent within the positive electrode active material layer can be suppressed.

The average particle diameter of the particles of the phosphorus-containing compound may be equal to or smaller than the pore diameter of the separator in a battery using the nonaqueous electrolyte solution. According to the above configuration, the particles of the phosphorus-containing compound do not clog the pores of the separator, and accordingly, the circulation of the electrolyte solution within the electrode group is not hindered even during charging and discharging.

In the present disclosure, the average particle diameter refers to the median diameter (d50). The median diameter is the particle diameter at a cumulative volume equal to 50% in the volumetric particle size distribution. The volumetric particle size distribution can be measured by laser diffraction scattering using a commercially available laser diffractometer.

The electrolyte includes, for example, a lithium salt. Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonyl imide (LiN(SO₂C₂F₅)₂), LiAsF₆, LiCF₃SO₃, and lithium difluoro(oxalato)borate. The electrolyte can be at least one selected from the substances described above as the lithium salt. The lithium salt may contain fluorine (F). The lithium salt may be LiPF₆.

The concentration of the lithium salt in the nonaqueous electrolyte solution may be, for example, 0.5 mol/L or more and 2 mol/L or less. By controlling the concentration of the lithium salt within the above range, an electrolyte solution having excellent ionic conductivity and moderate viscosity can be obtained. However, the concentration of the lithium salt is not limited to the above range.

The nonaqueous solvent is not particularly limited, and for example, a cyclic carbonate, a chain carbonate, or a cyclic carboxylate is used.

Examples of cyclic carbonates include propylene carbonate (PC) and ethylene carbonate (EC).

Examples of chain carbonates include diethyl carbonate (DEC), ethyl methyl carbonate (EMC), and dimethyl carbonate (DMC).

Examples of cyclic carboxylates include γ-butyrolactone (GBL) and γ-valerolactone (GVL).

One nonaqueous solvent may be used alone, or two or more nonaqueous solvents may be used in combination. The nonaqueous solvent may include ethylene carbonate. In this case, the solubility of the electrolyte, such as lithium salt, in the nonaqueous solvent can be enhanced.

The nonaqueous electrolyte solution according to Embodiment 1 may further contain other substances in addition to those described above. For example, the nonaqueous electrolyte solution according to Embodiment 1 may further contain an additive to enhance the dispersibility of the particles of the phosphorus-containing compound. The additive is, for example, a fluorine-containing solvent. That is, the nonaqueous electrolyte solution according to Embodiment 1 may further contain a fluorine-containing solvent. According to the above configuration, it is possible to reduce agglomeration of the particles of the phosphorus-containing compound that occurs over time and the resulting settling of the particles.

The fluorine-containing solvent may include a fluorinated ether. The fluorinated ether may include 1,1,2,2-tetrafluoroethyl-2,2,2-trifluoroethyl ether.

The fluorine-containing solvent may include a fluorinated cyclic ester. The fluorinated cyclic ester is a compound obtained by fluorinating a cyclic ester, and is, for example, a compound in which one or more hydrogen atoms bonded to a carbon atom constituting the ring structure of a cyclic ester are substituted with a fluorine atom. Due to the interaction among the fluorinated cyclic ester, the phosphorus-containing compound, and the lithium salt, the nonaqueous electrolyte solution of the present disclosure reduces agglomeration of the particles of the phosphorus-containing compound that occurs over time and the resulting settling of the particles, exhibiting enhanced dispersion stability. The nonaqueous electrolyte solution having enhanced dispersibility of the particles can enhance the industrial productivity of the nonaqueous electrolyte solution and a battery using the same, such as the battery described above. Furthermore, the nonaqueous electrolyte solution according to Embodiment 1 including the fluorinated cyclic ester may have thixotropy, and can gel over time when left standing. According to the above configuration, a battery including the nonaqueous electrolyte solution of the present disclosure has a reduced risk of liquid leakage upon damage. Furthermore, the reduced volatility of the nonaqueous solvent can suppress vaporization of the electrolyte solution and self-heating of the battery. Therefore, the nonaqueous electrolyte solution of the present disclosure can enhance the safety of the battery.

The carbon number of the fluorinated cyclic ester may be 3 or more and 10 or less, 3 or more and 4 or less, or 3. The fluorinated cyclic ester may include at least one selected from the group consisting of fluoroethylene carbonate, difluoroethylene carbonate, fluoropropylene carbonate, and trifluoropropylene carbonate. The fluorinated cyclic ester may include fluoroethylene carbonate. According to the above configuration, the nonaqueous electrolyte solution of the present disclosure has enhanced dispersion stability, enabling suppression of settling of the particles of the phosphorus-containing compound. Furthermore, according to the above configuration, the nonaqueous electrolyte solution exhibits thixotropy, enabling enhanced safety of the battery.

The content of the fluorinated cyclic ester may be 0.1 vol% or more and 30 vol% or less relative to the sum of the nonaqueous solvent and the fluorinated cyclic ester. The content of the fluorinated cyclic ester may be 0.5 vol% or more and 30 vol% or less, 1.0 vol% or more and 28.0 vol% or less, 5.0 vol% or more and 25.0 vol% or less, or 10.0 vol% or more and 20.0 vol% or less relative to the sum of the nonaqueous solvent and the fluorinated cyclic ester.

The nonaqueous electrolyte solution according to Embodiment 1 can be manufactured, for example, by the following method.

A lithium salt is dissolved in a nonaqueous solvent. The resulting solution, LiPO₄ particles or the like as the particles of the phosphorus-containing compound, and ZrO₂ balls as a mixing medium are mixed in a ball mill. The mixing medium is removed from the resulting liquid mixture, and thus the nonaqueous electrolyte solution according to Embodiment 1 is obtained.

The method for manufacturing the nonaqueous electrolyte solution is not limited to the above. For example, an ultrasonic homogenizer may be used to disperse the particles of the phosphorus-containing compound in the nonaqueous solvent in which the lithium salt is dissolved.

### (Embodiment 2)

A nonaqueous electrolyte secondary battery according to Embodiment 2 includes a positive electrode, a negative electrode, and the nonaqueous electrolyte solution according to Embodiment 1. By using the nonaqueous electrolyte solution according to Embodiment 1, the cycle characteristics of the secondary battery can be enhanced.

FIG. 1 is a cross-sectional view schematically showing an example of the nonaqueous electrolyte secondary battery according to Embodiment 2. A secondary battery 100 includes a container 1, an electrode group 4, and an electrolyte solution that is not shown. The electrolyte solution is the nonaqueous electrolyte solution according to Embodiment 1. The electrode group 4 has a wound structure. The electrode group 4 is housed in the container 1. The electrode group 4 includes a positive electrode 5, a negative electrode 6, and a pair of separators 7. The electrode group 4 is impregnated with the electrolyte solution. The opening of the container 1 is sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back surface of the sealing plate 2. An insulating packing 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

The constituent elements of the secondary battery 100 are described in detail below.

The positive electrode current collector 5a can be a sheet or film formed of a metal material such as aluminum, stainless steel, titanium, or an alloy of any of these. Aluminum and alloys thereof are inexpensive and can be easily formed into thin films and are accordingly suitable as materials of the positive electrode current collector 5a. The sheet or film may be porous or non-porous. The sheet or film is metal foil, metal mesh, or the like. A carbon material, such as carbon, as a conductive auxiliary material may be applied to the surface of the positive electrode current collector 5a.

The positive electrode active material layer 5b includes a positive electrode active material. The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

The positive electrode active material may include a lithium nickel oxide having a layered rock-salt crystal structure. The proportion of Ni to the metal elements contained in the lithium nickel oxide except for Li may be 50 at% or more. The lithium nickel oxide may include an additional transition metal. The lithium nickel oxide is useful for achieving a high operating voltage.

The lithium nickel oxide may be represented by the following composition formula (I). The element M1 is at least one selected from the group consisting of V, Co, and Mn. The element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}Niₓ₁M1ₓ₂M2₍₁₋ₓ₁₋ₓ₂₎O_{2+β} (I)

The positive electrode active material layer 5b may include other materials such as a conductive additive and a binder.

The conductive additive is used to reduce the resistance of the positive electrode 5. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, or polyimide.

The negative electrode current collector 6a can be a sheet or film formed of a metal material such as stainless steel, nickel, copper, or an alloy of any of these. The sheet or film may be porous or non-porous. The sheet or film is metal foil, metal mesh, or the like. A carbon material, such as carbon, as a conductive auxiliary material may be applied to the surface of the negative electrode current collector 6a.

The negative electrode active material layer 6b includes a negative electrode active material. The negative electrode active material can be a material capable of occluding and releasing lithium ions. The negative electrode active material includes, for example, at least one selected from the group consisting of a carbon material and a material capable of forming an alloy with lithium. An example of the carbon material is graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charging and discharging at deep depths. A carbon material other than graphite may be used as the negative electrode active material. Silicon exhibits higher capacity than graphite and is accordingly advantageous for increasing the capacity of the secondary battery 100.

The negative electrode active material layer 6b may include other materials such as a conductive additive and a binder. The materials that can be used as the conductive additive and the binder in the positive electrode active material layer 5b can also be used in the negative electrode active material layer 6b.

The electrolyte solution is the nonaqueous electrolyte solution according to Embodiment 1. The electrolyte solution is impregnated in the positive electrode 5, the negative electrode 6, and the separator 7. The electrolyte solution may fill the interior space of the container 1. The action of the electrolyte solution allows lithium ions to migrate between the positive electrode 5 and the negative electrode 6.

The average particle diameter of the particles of the phosphorus-containing compound contained in the electrolyte solution may be equal to or smaller than the pore diameter of the separator 7.

The separator 7 has lithium-ion conductivity. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. When the separator 7 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by weaving glass fibers into a nonwoven fabric. By using the nonaqueous electrolyte solution according to Embodiment 1 in the secondary battery 100, the oxidation of the separator 7 is suppressed, enabling a reduction in the decrease in the strength of the separator 7.

The container 1 is, for example, a container made of a metal such as aluminum or stainless steel. The container 1 may have a cylindrical shape or a prismatic shape.

The electrode group 4 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 1 is described. In this configuration example, a secondary battery includes an electrode group, in which a positive electrode and a negative electrode are wound with a separator interposed therebetween, and an electrolyte solution, both of which are housed in an exterior body. However, the secondary battery according to the present disclosure is not limited to this configuration example. The secondary battery according to the present disclosure may be in any form such as a cylindrical type, a prismatic type, a coin type, a button type, or a laminated type. Furthermore, as the electrode group in the secondary battery according to the present disclosure, the wound-type electrode group may be replaced with any other type of electrode group such as a stacked-type electrode group in which a positive electrode and a negative electrode are stacked with a separator interposed therebetween.

The application of the nonaqueous electrolyte solution of the present disclosure is not limited to the secondary battery 100. The nonaqueous electrolyte solution of the present disclosure can be applied to various secondary batteries in addition to lithium secondary batteries, such as sodium secondary batteries and magnesium secondary batteries.

### (Other Embodiments)

### (Supplementary Description)

The above description of the embodiments discloses the following techniques.

### (Technique 1)

A nonaqueous electrolyte solution including:
a nonaqueous solvent;
an electrolyte dissolved in the nonaqueous solvent; and
particles of a phosphorus-containing compound insoluble in the nonaqueous solvent, wherein
the phosphorus-containing compound includes at least one selected from the group consisting of Li₃PO₄, Na₃PO₄, K₃PO₄, LiPO₃, LiPO₃F, metaphosphoric acid, and calcium phosphate, and
the nonaqueous electrolyte solution has fluidity at 25°C.

According to this configuration, the cycle characteristics of the battery can be enhanced.

### (Technique 2)

The nonaqueous electrolyte solution according to Technique 1, wherein the phosphorus-containing compound includes Li₃PO₄. According to this configuration, the cycle characteristics of the battery can be enhanced.

### (Technique 3)

The nonaqueous electrolyte solution according to Technique 1 or 2, wherein a content of the particles in the nonaqueous electrolyte solution is 0.1 vol% or more and 10 vol% or less. According to this configuration, favorable dispersibility of the particles of the phosphorus-containing compound and favorable fluidity of the nonaqueous electrolyte solution can be achieved.

### (Technique 4)

The nonaqueous electrolyte solution according to any one of Techniques 1 to 3, wherein an average particle diameter of the particles is 1 nm or more and 500 nm or less. According to this configuration, the particles of the phosphorus-containing compound in the nonaqueous electrolyte solution have enhanced dispersibility, enabling enhanced industrial productivity.

### (Technique 5)

The nonaqueous electrolyte solution according to any one of Techniques 1 to 4, further including a fluorine-containing solvent. According to this configuration, the particles of the phosphorus-containing compound in the nonaqueous electrolyte solution have enhanced dispersibility, enabling enhanced industrial productivity.

### (Technique 6)

The nonaqueous electrolyte solution according to Technique 5, wherein the fluorine-containing solvent includes a fluorinated ether. According to this configuration, the particles of the phosphorus-containing compound in the nonaqueous electrolyte solution have enhanced dispersibility, enabling enhanced industrial productivity.

### (Technique 7)

The nonaqueous electrolyte solution according to Technique 6, wherein the fluorinated ether includes 1,1,2,2-tetrafluoroethyl-2,2,2-trifluoroethyl ether. According to this configuration, the particles of the phosphorus-containing compound in the nonaqueous electrolyte solution have further enhanced dispersibility, enabling enhanced industrial productivity.

### (Technique 8)

The nonaqueous electrolyte solution according to Technique 5, wherein the fluorine-containing solvent includes a fluorinated cyclic ester. According to this configuration, the dispersion stability of the nonaqueous electrolyte solution can be enhanced. Accordingly, the particles of the phosphorus-containing compound in the nonaqueous electrolyte solution have enhanced dispersibility, enabling enhanced industrial productivity of the nonaqueous electrolyte solution and a battery using the same.

### (Technique 9)

The nonaqueous electrolyte solution according to Technique 8, wherein the fluorinated cyclic ester includes at least one selected from the group consisting of fluoroethylene carbonate, difluoroethylene carbonate, fluoropropylene carbonate, and trifluoropropylene carbonate. According to this configuration, the dispersion stability can be further enhanced.

### (Technique 10)

The nonaqueous electrolyte solution according to Technique 8 or 9, wherein a content of the fluorinated cyclic ester is 0.1 vol% or more and 30 vol% or less relative to a sum of the nonaqueous solvent and the fluorinated cyclic ester. According to this configuration, favorable dispersibility of the particles of the phosphorus-containing compound and favorable fluidity of the nonaqueous electrolyte solution can be achieved.

### (Technique 11)

A nonaqueous electrolyte secondary battery including:
a positive electrode;
a negative electrode; and
the nonaqueous electrolyte solution according to any one of Techniques 1 to 10.

According to this configuration, the cycle characteristics can be enhanced.

### Examples

The present disclosure is described in more detail below with reference to examples. The following examples are merely illustrative of one embodiment and are not intended to limit the present disclosure.

### <Samples 1-1 to 1-5>

### (Sample 1-1)

### (Preparation of Nonaqueous Electrolyte Solution)

Ethylene carbonate (EC), ethyl methyl carbonate (EMC), and dimethyl carbonate (DMC) were mixed in a volume ratio of EC:EMC:DMC = 20:5:75 to prepare a nonaqueous solvent. In the nonaqueous solvent thus obtained, LiPF₆ was dissolved to a concentration of 1 mol/L to obtain a solution. An amount of 15 g of the solution thus obtained, 1.2 g of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant liquid of the resulting liquid mixture was drawn off using a pipette to remove the ZrO₂ balls, and thus the nonaqueous electrolyte solution of Sample 1-1 was obtained. In the nonaqueous electrolyte solution of Sample 1-1, the Li₃PO₄ particles were dispersed at 4 vol%. The nonaqueous electrolyte solution of Sample 1-1 had fluidity at 25°C.

### (Sample 1-2)

EC, 1,1,2,2-tetrafluoroethyl-2,2,2-trifluoroethyl ether (ASAHIKLIN AE-3000, manufactured by AGC Inc.), EMC, and DMC were mixed in a volume ratio of EC:AE-3000:EMC:DMC = 15:5:5:75 to prepare a nonaqueous solvent. Except for the use of the nonaqueous solvent thus obtained, the nonaqueous electrolyte solution of Sample 1-2 was obtained in the same manner as in Sample 1-1.

### (Sample 1-3)

The nonaqueous electrolyte solution of Sample 1-3 was obtained in the same manner as in Sample 1-1, except that 0.6 g of Li₃PO₄ particles (average particle diameter: 10 µm) as the particles of the phosphorus-containing compound were introduced into a ball mill.

### (Sample 1-4)

The nonaqueous electrolyte solution of Sample 1-4 was obtained in the same manner as in Sample 1-1, except that 0.3 g of Li₃PO₄ particles (average particle diameter: 10 µm) as the particles of the phosphorus-containing compound were introduced into a ball mill.

### (Sample 1-5)

EC, EMC, and DMC were mixed in a volume ratio of EC:EMC:DMC = 20:5:75 to prepare a nonaqueous solvent. In the nonaqueous solvent thus obtained, LiPF₆ was dissolved to a concentration of 1 mol/L to obtain the nonaqueous electrolyte solution of Sample 1-5. That is, the nonaqueous electrolyte solution of Sample 1-5 was prepared in the same manner as in Sample 1-1, except that the particles of the phosphorus-containing compound were not contained.

### [Dispersion Stability Evaluation of Nonaqueous Electrolyte Solutions]

The nonaqueous electrolyte solutions of Sample 1-1 to Sample 1-4 were each placed in a transparent glass container and left standing for 72 hours, after which the dispersion state of the Li₃PO₄ particles was visually inspected. As a result of the evaluation, the nonaqueous electrolyte solutions of Samples 1-1, 1-3, and 1-4 exhibited settling of part of the particles after 6 hours, and sediment was observed on the bottom surface of the container. The nonaqueous electrolyte solution of Sample 1-2 exhibited no settling of the particles even after 72 hours, and no sediment was observed on the bottom surface of the container. The elapsed time at which settling was observed is shown in Table 1.

### [Fabrication of Test Cells]

Respective test cells were fabricated using the nonaqueous electrolyte solutions of Sample 1-1 to Sample 1-5 by the following procedure.

A positive electrode active material having the composition Li(Ni_{0.6}Co_{0.2}Mn_{0.2})O₂, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was positive electrode active material:AB:PVDF = 96:2:2.

The positive electrode slurry was applied to the surface of an aluminum foil (1.45 cm × 1.45 cm), and the resulting coating film was dried and then rolled to form the positive electrode active material layer. Thus, the positive electrode was obtained.

Laminated half-cells were each fabricated using the positive electrode, a Li metal foil (2 cm × 2 cm, thickness: 200 µm) as the counter electrode, a separator, and the nonaqueous electrolyte solution of each of Sample 1-1 to Sample 1-5. The separator used was a polyethylene separator (#2320, manufactured by Celgard, LLC).

Thus, the evaluation cells of Sample 1-1 to Sample 1-5 were obtained.

### [Cycle Test]

The evaluation cells of Sample 1-1 to Sample 1-5 were subjected to a cycle test by the following procedure. At an ambient temperature of 55°C, the evaluation cells of Sample 1-1 to Sample 1-5 were subjected to a constant-current charge at a current value of 0.3C until the voltage reached 4.7 V. Subsequently, a constant-current discharge was performed at a current value of 0.3C until the voltage reached 2.5 V. The charge and discharge described above were defined as one cycle, and the cycle was repeated 43 times to evaluate the capacity retention rate. The evaluation results are shown in Table 1.

### [Evaluation of Separator Strength]

The evaluation cells of Sample 1-1 to Sample 1-5 were subjected to a trickle test by the following procedure, followed by a piercing test on the separator.

### (Trickle Test)

At an ambient temperature of 55°C, the evaluation cells of Sample 1-1 to Sample 1-5 were subjected to a constant-current charge at a current value of 0.3C until the voltage reached 4.7 V, and subsequently, the voltage of 4.7 V was maintained for 72 hours.

### (Piercing Test on Separator)

The evaluation cells of Sample 1-1 to Sample 1-5 after the trickle test were each disassembled to remove the separator. From the separator thus removed, a single test piece measuring 20 mm × 20 mm was cut out. For each sample, five such test pieces were prepared. The test piece was fixed in a jig and pierced, from the surface facing the positive electrode, with a hemispherical needle having a diameter of 1.0 mm and a tip radius of 0.5 mm, at a test speed of 50±5 mm/min. The maximum force [N] required for the needle to penetrate the test piece was measured. The above measurement was performed on all the test pieces, and the average value was determined as the separator strength. The evaluation results are shown in Table 1. As a result of the same piercing test performed on the separator before the trickle test, the separator strength was 4.0 N.

In Table 1, the capacity retention rate is expressed as a relative value based on 100% of the capacity at the 1st cycle for each test cell. The separator strength retention ratio is the ratio (%) of the separator strength of Sample 1-1 to Sample 1-5 after the trickle test to the separator strength before the trickle test (4.0 N).

**[Table 1]**

| | Capacity retention rate (%) | Separator strength retention ratio (%) | Dispersion stability of nonaqueous electrolyte solution |
|---|---|---|---|
| Sample 1-1 | 77 | 96 | Settling present after 6 hours |
| Sample 1-2 | 76 | 96 | Settling absent |
| Sample 1-3 | 74 | 94 | Settling present after 6 hours |
| Sample 1-4 | 70 | 91 | Settling present after 6 hours |
| Sample 1-5 | 57 | 33 | - |

### (Discussion)

In the cycle test, the secondary batteries of Sample 1-1 to Sample 1-4 exhibited enhanced capacity retention rates compared with the secondary battery of Sample 1-5. The separator of Sample 1-5 exhibited a decrease in strength after the trickle test relative to before the test, whereas the separators of Sample 1-1 to Sample 1-4 exhibited almost no decrease in strength. Here, the strength of the separator decreases as the number of double bonds increases due to dehydrogenation reactions caused by oxidation. The above results demonstrate that oxidation of the solvent and the separator was suppressed in the evaluation cells of Sample 1-1 to Sample 1-4. The nonaqueous electrolyte solution of Sample 1-2 exhibited dispersion stability superior to the dispersion stability of the nonaqueous electrolyte solutions of Samples 1-1, 1-3, and 1-4.

### <Samples 2-1 to 2-9>

### (Sample 2-1)

The nonaqueous solvents used were ethylene carbonate (EC), ethyl methyl carbonate (EMC), and dimethyl carbonate (DMC). The fluorinated cyclic ester used was fluoroethylene carbonate (FEC). The EC, the FEC, the EMC, and the DMC were mixed in a volume ratio of EC:FEC:EMC:DMC = 10:10:5:75 to prepare a solvent. In the solvent thus obtained, LiPF₆ was dissolved to a concentration of 1 mol/L to obtain a solution. An amount of 15 g of the solution thus obtained, 0.3 g of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant liquid of the resulting liquid mixture was drawn off using a pipette to remove the ZrO₂ balls, and thus the nonaqueous electrolyte solution of Sample 2-1 was obtained. In the nonaqueous electrolyte solution of Sample 2-1, the Li₃PO₄ particles were dispersed at 1 vol%.

The viscosity of the nonaqueous electrolyte solution of Sample 2-1 at 25°C was measured using a rheometer (MCR72, manufactured by Anton Paar GMBH) at a shear rate of 1,000 s⁻¹. The viscosity of the nonaqueous electrolyte solution of Sample 2-1 at 25°C was 4.95 mPa•s.

### (Sample 2-2)

FEC, EMC, and DMC were mixed in a volume ratio of FEC:EMC:DMC = 20:5:75 to prepare a solvent. Except for the use of the solvent thus obtained, the nonaqueous electrolyte solution of Sample 2-2 was obtained in the same manner as in Sample 2-1.

The viscosity of the nonaqueous electrolyte solution of Sample 2-2 at 25°C measured in the same manner as in Sample 2-1 was 4.21 mPa•s.

### (Sample 2-3)

The nonaqueous electrolyte solution of Sample 2-3 was obtained in the same manner as in Sample 2-1, except that 1.2 g of Li₃PO₄ particles (average particle diameter: 10 µm) as the particles of the phosphorus-containing compound were introduced into a ball mill.

The viscosity of the nonaqueous electrolyte solution of Sample 2-3 at 25°C measured in the same manner as in Sample 2-1 was 9.21 mPa•s.

### (Sample 2-4)

The nonaqueous electrolyte solution of Sample 2-4 was obtained in the same manner as in Sample 2-2, except that 1.2 g of Li₃PO₄ particles (average particle diameter: 10 µm) as the particles of the phosphorus-containing compound were introduced into a ball mill.

The viscosity of the nonaqueous electrolyte solution of Sample 2-4 at 25°C measured in the same manner as in Sample 2-1 was 9.25 mPa•s.

### (Sample 2-5)

The nonaqueous electrolyte solution of Sample 2-5 was obtained in the same manner as in Sample 2-1, except that 1.8 g of Li₃PO₄ particles (average particle diameter: 10 µm) as the particles of the phosphorus-containing compound were introduced into a ball mill.

The viscosity of the nonaqueous electrolyte solution of Sample 2-5 at 25°C measured in the same manner as in Sample 2-1 was 13.52 mPa•s.

### (Sample 2-6)

The nonaqueous electrolyte solution of Sample 2-6 was obtained in the same manner as in Sample 2-2, except that 1.8 g of Li₃PO₄ particles (average particle diameter: 10 µm) as the particles of the phosphorus-containing compound were introduced into a ball mill.

The viscosity of the nonaqueous electrolyte solution of Sample 2-6 at 25°C measured in the same manner as in Sample 2-1 was 14.46 mPa•s.

### (Sample 2-7)

EC, EMC, and DMC were mixed in a volume ratio of EC:EMC:DMC = 20:5:75 to prepare a solvent. Except for the use of the solvent thus obtained, the nonaqueous electrolyte solution of Sample 2-7 was obtained in the same manner as in Sample 2-1. In Sample 2-7, the fluorinated cyclic ester was not used.

The viscosity of the nonaqueous electrolyte solution of Sample 2-7 at 25°C measured in the same manner as in Sample 2-1 was 4.24 mPa•s.

### (Sample 2-8)

The nonaqueous electrolyte solution of Sample 2-8 was obtained in the same manner as in Sample 2-7, except that 1.2 g of Li₃PO₄ particles (average particle diameter: 10 µm) as the particles of the phosphorus-containing compound were introduced into a ball mill.

The viscosity of the nonaqueous electrolyte solution of Sample 2-8 at 25°C measured in the same manner as in Sample 2-1 was 8.06 mPa•s.

### (Sample 2-9)

The nonaqueous electrolyte solution of Sample 2-9 was obtained in the same manner as in Sample 2-7, except that 1.8 g of Li₃PO₄ particles (average particle diameter: 10 µm) as the particles of the phosphorus-containing compound were introduced into a ball mill.

The viscosity of the nonaqueous electrolyte solution of Sample 2-9 at 25°C measured in the same manner as in Sample 2-1 was 11.38 mPa•s.

[Dispersion Stability Evaluation of Nonaqueous Electrolyte Solutions]

The nonaqueous electrolyte solutions of Samples 2-1 to 2-9 were each placed in a container and left standing for 12 hours, after which the dispersion state of the Li₃PO₄ particles was visually inspected. As a result of the evaluation, the nonaqueous electrolyte solutions of Samples 2-1 to 2-6 exhibited no settling of the particles even after 12 hours, and the nonaqueous electrolyte solutions were in a single-phase state. The nonaqueous electrolyte solutions of Samples 2-7 to 2-9 already exhibited settling of the particles after 12 hours, and the nonaqueous electrolyte solutions were separated into two phases. The above results are shown in Table 1. Furthermore, after the above standing, the nonaqueous electrolyte solutions of Samples 1-1 to 1-6 were in a gel form. From the above, it was confirmed that the nonaqueous electrolyte solutions of Samples 2-1 to 2-6 have thixotropy.

**[Table 2]**

| | Li₃PO₄ ratio in nonaqueous electrolyte solution (vol%) | FEC ratio in solvent (vol%) | Viscosity (mPa•s) | Dispersion stability |
|---|---|---|---|---|
| Sample 2-1 | 1 | 10 | 4.95 | Settling absent |
| Sample 2-2 | 1 | 20 | 4.21 | Settling absent |
| Sample 2-3 | 4 | 10 | 9.21 | Settling absent |
| Sample 2-4 | 4 | 20 | 9.25 | Settling absent |
| Sample 2-5 | 6 | 10 | 13.52 | Settling absent |
| Sample 2-6 | 6 | 20 | 14.46 | Settling absent |
| Sample 2-7 | 1 | 0 | 4.24 | Settling present |
| Sample 2-8 | 4 | 0 | 8.06 | Settling present |
| Sample 2-9 | 6 | 0 | 11.38 | Settling present |

### <Samples 2-10 to 2-11>

### (Sample 2-10)

The nonaqueous electrolyte solution of Sample 2-10 was obtained in the same manner as in Sample 2-3, except that the LiPF₆ concentration in the solution was changed to 1.3 mol/L.

### (Sample 2-11)

EC, FEC, EMC, and DMC were mixed in a volume ratio of EC:FEC:EMC:DMC = 10:10:5:75 to prepare a solvent. In the solvent thus obtained, LiPF₆ was dissolved to a concentration of 1.3 mol/L to obtain the nonaqueous electrolyte solution of Sample 2-11. That is, the nonaqueous electrolyte solution of Sample 2-11 was prepared in the same manner as in Sample 2-10, except that the particles of the phosphorus-containing compound were not contained.

### [Fabrication of Evaluation Cells]

Respective evaluation cells were fabricated using the nonaqueous electrolyte solutions of Sample 2-10 and Sample 2-11 by the following procedure.

A positive electrode active material having the composition LiNi_{0.5}Mn_{0.5}O₂, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was positive electrode active material:AB:PVDF = 96:2:2.

The positive electrode slurry was applied to the surface of an aluminum foil (1.45 cm × 1.45 cm), and the resulting coating film was dried and then rolled to form the positive electrode active material layer. Thus, the positive electrode was obtained.

Cells were each fabricated using the positive electrode, a graphite electrode as the negative electrode, a separator, and the nonaqueous electrolyte solution of each of Sample 2-10 and Sample 2-11. The separator used was a three-layer separator (PP/PE/PP).

Thus, the evaluation cells of Samples 2-10 and 2-11 were obtained.

[Thermal Behavior Evaluation (ARC Evaluation)]

The evaluation cells were tested to evaluate the presence or absence of self-heating and gas generation using an accelerating rate calorimeter ((ARC) manufactured by NETZSCH) under the following conditions.
Measurement start temperature: 80°C
Hold time: 20 min
Temperature increase for heat generation detection: 0.02°C/min
Temperature increment: 5°C
Battery voltage: 4.0 V in charged state

When a temperature increase equal to or greater than the temperature increase for heat generation detection was not detected for 20 minutes from the measurement start temperature, the temperature was increased to the next step and the measurement was performed again. When a temperature increase equal to or greater than the temperature increase for heat generation detection was detected, self-heating was determined to have started, and the temperature at that time was defined as the self-heating start temperature. After holding at the self-heating start temperature for 20 minutes, the presence or absence of gas generation was confirmed.

In the evaluation cell of Sample 2-10, neither the presence of self-heating nor the presence of gas generation was observed, even at temperatures reaching 200°C during the ARC evaluation. In the evaluation cell of Sample 2-11, the presence of self-heating and the presence of gas generation were observed.

**[Table 3]**

| | Li₃PO₄ ratio in nonaqueous electrolyte solution (vol%) | FEC ratio in solvent (vol%) | Self-heating | Gas generation |
|---|---|---|---|---|
| Sample 2-10 | 4 | 10 | Absent | Absent |
| Sample 2-11 | 0 | 10 | Present | Present |

### (Discussion)

As is evident from Table 2, the nonaqueous electrolyte solutions of Samples 2-1 to 2-6 exhibited no settling of the Li₃PO₄ particles and exhibited excellent dispersion stability. As is evident from Table 3, the cell of Sample 2-10 including the nonaqueous electrolyte solution of the present disclosure exhibited neither self-heating nor gas generation. Therefore, the cell of Sample 2-10 exhibited safety superior to that of the cell of Sample 2-11.

### INDUSTRIAL APPLICABILITY

The technique of the present disclosure is useful, for example, in lithium-ion secondary batteries.

## Claims

1. A nonaqueous electrolyte solution comprising:
a nonaqueous solvent;
an electrolyte dissolved in the nonaqueous solvent; and
particles of a phosphorus-containing compound insoluble in the nonaqueous solvent, wherein
the phosphorus-containing compound comprises at least one selected from the group consisting of Li₃PO₄, Na₃PO₄, K₃PO₄, LiPO₃, LiPO₃F, metaphosphoric acid, and calcium phosphate, and
the nonaqueous electrolyte solution has fluidity at 25°C.

2. The nonaqueous electrolyte solution according to claim 1, wherein
the phosphorus-containing compound comprises Li₃PO₄.

3. The nonaqueous electrolyte solution according to claim 1, wherein
a content of the particles in the nonaqueous electrolyte solution is 0.1 vol% or more and 10 vol% or less.

4. The nonaqueous electrolyte solution according to claim 1, wherein
an average particle diameter of the particles is 1 nm or more and 500 nm or less.

5. The nonaqueous electrolyte solution according to claim 1, further comprising a fluorine-containing solvent.

6. The nonaqueous electrolyte solution according to claim 5, wherein
the fluorine-containing solvent comprises a fluorinated ether.

7. The nonaqueous electrolyte solution according to claim 6, wherein
the fluorinated ether comprises 1,1,2,2-tetrafluoroethyl-2,2,2-trifluoroethyl ether.

8. The nonaqueous electrolyte solution according to claim 5, wherein
the fluorine-containing solvent comprises a fluorinated cyclic ester.

9. The nonaqueous electrolyte solution according to claim 8, wherein
the fluorinated cyclic ester comprises at least one selected from the group consisting of fluoroethylene carbonate, difluoroethylene carbonate, fluoropropylene carbonate, and trifluoropropylene carbonate.

10. The nonaqueous electrolyte solution according to claim 8, wherein
a content of the fluorinated cyclic ester is 0.1 vol% or more and 30 vol% or less relative to a sum of the nonaqueous solvent and the fluorinated cyclic ester.

11. A nonaqueous electrolyte secondary battery comprising:
a positive electrode;
a negative electrode; and
the nonaqueous electrolyte solution according to any one of claims 1 to 10.
